(19) Europäisches Patentamt
European Patent Office
Office européen des brevets

(11) Publication number: **0 143 464**
**B1**

(12) **EUROPEAN PATENT SPECIFICATION**

(45) Date of publication of patent specification: **08.07.87**

(51) Int. Cl.[4]: **C 08 K 5/00,** C 07 F 9/15 // (C08K5/00, 5:17, 5:52)

(21) Application number: **84114400.9**

(22) Date of filing: **28.11.84**

(54) **Pentaerythritol-spiro-bis-phosphite compositions having improved hydrolytic stability.**

(30) Priority: **28.11.83 US 542923**

(43) Date of publication of application:
**05.06.85 Bulletin 85/23**

(45) Publication of the grant of the patent:
**08.07.87 Bulletin 87/28**

(84) Designated Contracting States:
**AT BE CH DE FR GB LI NL**

(56) References cited:
**US-A-3 703 496**
**US-A-4 116 926**

**PATENTS ABSTRACTS OF JAPAN, vol. 7, no. 171 (C-178)(1316), July 28, 1983 & JP-A-58 79042**

(73) Proprietor: **Argus Chemical Corporation**
**633 Court Street**
**Brooklyn New York 11231 (US)**

(72) Inventor: **Fisch, Michael H.**
**64 Kiwanis Drive**
**Wayne, NJ 07470 (US)**
Inventor: **Blum, Jamie**
**410-I Hideaway Loop**
**Glen Burnie, MD 21061 (US)**
Inventor: **Brecker, Lawrence R.**
**1942 New York Avenue**
**Brooklyn, NY 11210 (US)**

(74) Representative: **Weinhold, Peter, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
**Siegfriedstrasse 8**
**D-8000 München 40 (DE)**

**EP 0 143 464 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Many organic phosphites have been proposed as stabilizers for polyvinyl chloride resins, and are employed either alone or in conjunction with other stabilizing compounds, such as polyvalent metal salts of fatty acids and alkyl phenols. Such phosphite stabilizers normally contain alkyl or aryl radicals in sufficient number to satisfy the three valences of the phosphite, and typical phosphites are described in the patent literature, for example, US—A—2,564,646, 2,716,092 and 2,997,454.

Organic phosphites have also been added as stabilizers in amounts of 0.01 to 1%, preferably 0.05% to 0.2% by weight, to high molecular weight polycarbonate plastics, for example the polycarbonate of 2,2'-bis(4-hydroxyphenyl) propane.

Phosphites are also employed in conjunction with other stabilizers such as a polyhydric phenol in the stabilization of polypropylene and other synthetic resins against degradation upon heating or ageing under atmospheric conditions. The polyhydric phenol is thought to function as an antioxidant in such combinations.

The importance of organic phosphites as stabilizers for synthetic resins has led to the development of a large variety of special phosphites intended to provide improved stabilizing effectiveness and compatibility and ease of compounding with the resin and with other stabilizers commonly used.

Among these special phosphites, US—A—3,047,608 discloses a class of spiro-biphosphites having the formula:

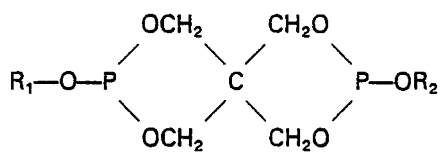

in which $R_1$ and $R_2$ are alkyl or aryl.

US—A—4,290,976 states that dialkyl pentaerythritol diphosphites having the structural formula

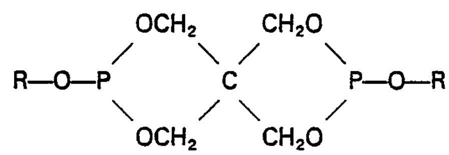

where R and R are alkyl groups have been known for some time as effective stabilizers for vinyl polymers. They have been used primarily to stabilize vinyl chloride polymers and polyolefins, but have found use also in the stabilization of styrene polymers such as ABS.

However, these dialkyl pentaerythritol diphosphites have not been characterized by good hydrolytic stability. In a moist environment they tend to undergo hydrolytic decomposition, with a corresponding loss of polymer-stabilizing effectiveness. Attempts to solve this problem of hydrolysis have utilized additives and these have been somewhat successful, but the problem remains, according to said patent.

In US—A—3,553,298 it is suggested that the hydrolytic stability of phosphite esters of a wide class could be improved by combination therewith of an additive that is nitrogen-containing and selected from the group consisting of heterocyclic alkyl nitrogen compounds, such as typically piperidine, pyrrolidine, piperazine, diketopiperazine, picoline, anthraquinoline, N-methyl pyrrolidine, thiazole, oxazolidine, isooxazolidine, and oxdiazole; aromatic heterocyclic nitrogen compounds, such as typically oxazoline, isoxazoline, thiotriazole, pyridine, picoline, pyrrole, and quinoline; dialkanolamines such as typically diisopropanol amine, diethanol amine, tetraethanol ethylene diamine, and tetraisopropanol ethylene diamine; trialkanol amines such as typically triisopropanol amine, and triethanol amine; ammonia; and alkyl amines such as triethylamine, dimethyl amine, and tripropylamine.

The stabilizer is normally employed in from about 0.01% to about 5% by weight of the phosphite ester, preferably from about 0.2% to about 1%.

According to US—A—4,116,926 triisopropanolamine was found to be a particularly effective stabilizer for dialkylpentaerythritol diphosphites and polyalkyl bisphenol-A polyphosphites.

The dialkylpentaerythritol diphosphites have the structural formula:

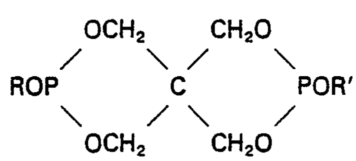

where R and R' are alkyl groups. The polyalkyl bisphenol-A polyphosphites have the structural formula:

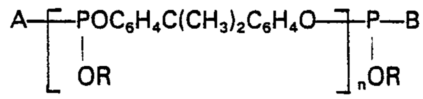

where A and B are each $HOC_6H_4C(CH_3)_2C_6H_4O$ or RO. R is alkyl and n is 1 to 5.

Most alkyl and alkylaryl pentaerythritol-spiro-bis phosphites having fourteen or more carbon atoms in the alkyl or alkylaryl groups and indeed even pentaerythritol-spiro-bis phosphite itself are solid materials. When their melting point is above 40°C, they are readily reduced to particulate form, and therefore are easily blended with other solid stabilizers for combination with synthetic resins. When however triisopropanolamine is used to improve hydrolytic stability, the desirable qualities of these pentaerythritol-spiro-bis-phosphites as an easily-handled particulate solid material are lost, and the material is converted into a sticky solid that is rather difficult to work with. It is not readily reduced to particulate form, and when in particulate form tends to agglomerate with itself and with other materials that are sought to be blended therewith, in formulating multicomponent stabilizer systems.

From JP—A—58—79042 there is known a durable film not whitening, having improved color tone and antistatic properties, said film comprising, among others, an amine and an organic phosphite as used in the present invention. However, the weight ratio of amine to phosphite is at least 3:1.

In accordance with the present invention, it has been determined that long-chain aliphatic amines are effective in improving the hydrolytic stability of pentaerythritol-spiro-bis-phosphites, and in addition are readily formulated therewith to form nonsticky solid compositions that are readily reduced to particulate form, and can easily be blended with other stabilizers and with synthetic resins, thus overcoming the stickiness problem inherent in the use of triisopropanolamine.

The pentaerythritol-spiro-bis-phosphite compositions of the invention having an improved hydrolytic stability consist essentially of

(1) a pentaerythritol-spiro-bis-phosphite having the formula:

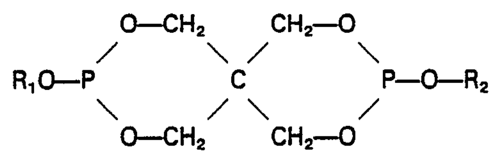

I

wherein:

$R_1$ and $R_2$ are selected from the group consisting of alkyl and alkylaryl groups having at least fourteen carbon atoms up to about thirty-six carbon atoms; and

(2) a long-chain aliphatic amine having the formula:

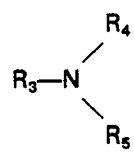

II

wherein:

$R_3$, $R_4$ and $R_5$ are selected from the group consisting of hydrogen; aliphatic (including alkyl and alkenyl) groups having from one to thirty-six carbon atoms; and hydroxyalkyl having from two to six carbon atoms; one of $R_3$, $R_4$ and $R_5$ is an aliphatic group having at least fourteen carbon atoms, and the remaining of $R_3$, $R_4$ and $R_5$ are selected from hydrogen, alkyl having from one to four carbon atoms and hydroxyalkyl; and preferably at least one of $R_3$, $R_4$ and $R_5$ is hydroxyalkyl said amine being present in amounts from 0.1 to 35% by weight of the composition.

The improvement in hydrolytic stability of the pentaerythritol-spiro-bis-phosphite is evident with the addition of even small amounts, as little as 0.1%, of the aliphatic amine. The improvement is commensurate with the amount added in amounts up to 35% aliphatic amine by weight of the composition, but in most instances amounts within the range from 0.5% to 20% of the amine give adequate hydrolytic stability for normal use. Such amounts are therefore preferred.

Exemplary $R_3$, $R_4$ and $R_5$ alkyl groups in the amines include, for example, methyl, ethyl, propyl, isopropyl, butyl, secondary butyl, tertiary butyl, isobutyl, amyl, isoamyl, secondary amyl, 2,2-dimethyl propyl, tertiary amyl, hexyl, isohexyl, heptyl, octyl, 2-ethyl hexyl, isooctyl, nonyl, isononyl, decyl, isodecyl and lauryl. The following are also exemplary of $R_1$ and $R_2$ in the phosphite as well as $R_3$, $R_4$ and $R_5$ in the amines: myristyl, palmityl, stearyl, eicosyl, behenyl, tricosyl, tetracosyl, octacosyl, nonacosyl, triacontyl, hentriacontyl, tritriacontyl, and hexatriacontyl.

$R_1$ and $R_2$ alkaryl groups in the phosphite include octylphenyl, 2,6-di-t-butyl-4-methylphenyl, 2,6-di-t-butyl-4-methoxycarbonyl, ethylphenyl, isooctylphenyl, t-octylphenyl, nonylphenyl, 2,4-di-t-butylphenyl, benzylphenyl and phenethylphenyl.

Exemplary pentaerythritol spiro-bis-phosphites include dimyristyl pentaerythritol diphosphite,

dihexadecyl pentaerythritol diphosphite, distearyl pentaerythritol diphosphite, bis(2,4-di-t-butylphenyl) pentaerythritol diphosphite, di-(2,6-di-t-butylphenyl) pentaerythritol diphosphite, di-(2-t-butyl-4-methylphenyl) pentaerythritol diphosphite, 2,4-di-t-butyl-6-methylphenyl octylphenyl pentaerythritol diphosphite, 2,4-di-t-butyl-6-methylphenyl nonylphenyl pentaerythritol diphosphite, bis(2,6-di-t-butyl-4-methylphenyl) pentaerythritol diphosphite, bis(2,6-di-t-butyl-4-ethylphenyl) pentaerythritol diphosphite, 2,6-di-t-butyl-4-methylphenyl-2,6-di-t-butylphenyl pentaerythritol diphosphite, 2,6-di-t-butyl-4-methylphenyl-2,4-di-t-butylphenyl pentaerythritol diphosphite, 2,6-di-t-butyl-4-methylphenyl-2,4-di-t-octylphenyl pentaerythritol diphosphite, 2,6-di-t-amyl-4-methylphenyl phenyl pentaerythritol diphosphite, bis(2,6-di-t-amyl-4-methylphenyl) pentaerythritol diphosphite, bis(2,6-di-t-octyl-4-methylphenyl) pentaerythritol diphosphite.

The pentaerythritol spiro-bis-phosphite long chain aliphatic amine compositions of the invention can be prepared by blending the pentaerythritol spiro-bis-phosphite and long chain aliphatic amine in any convenient manner. When the phosphite is molten below about 110°C the aliphatic amine is conveniently mixed into the melt before allowing the composition to solidify. A relatively high melting pentaerythritol spiro-bis-phosphite can be blended with the amine with the assistance of a mutual solvent such as toluene or isopropanol. Alternatively, the particulate phosphite can be tumbled or agitated with the aliphatic amine in molten or particulate form.

Complete homogenization of the phosphite and amine composition is not essential. In fact, a condition in which a large part of the aliphatic amine is concentrated at or near the surface of the phosphite particles as in a coating or encapsulation desirably maximizes the effectiveness of the amine when used in modest concentrations, such as 5% by weight of the phosphite.

The following Example serves to illustrate the procedure for the preparation of the pentaerythritol-spiro-bis-phosphites of the invention.

Example I

Distearyl pentaerythritol diphosphite

To a reaction vessel fitted for vacuum stripping and temperature monitoring was added 62.06 g (0.20 mole) triphenylphosphite, 14.98 g (0.11 mole) pentaerythritol and 0.52 g anhydrous $K_2CO_3$. The mixture was heated to 150°C at 1,33 kPa (10 mm Hg) vacuum and the phenol produced by the reaction allowed to collect in the distillation receiver.

The vessel was cooled to 80°C and 52.20 g (0.193 mole) stearyl alcohol added. Heat was reapplied up to a maximum of 170°C pot temperature at 1,33 kPa (10 mm Hg) vacuum for about 1.5 hours while phenol was collected in the receiver. The residue was cooled to 75 to 80°C and filtered.

The combined phenol was 55.3 g, or 98% of the theoretical amount. The product was 71 g of an off-white flaky material with mp 37 to 58°C and 7.9% trivalent phosphorus content, determined by oxidative titration as described in US—A—3,056,824. (The theoretical trivalent phosphorus content is 8.2%).

Example II

Di(2,4-di-t-butylphenyl) pentaerythritol diphosphite

To a stirred slurry of 68.1 g (0.5 mole) pentaerythritol in 125 ml tetrahydrofuran was added dropwise during one hour 144.2 g (1.05 mole) phosphorus trichloride while the temperature of the mix was kept between 10 and 15°C by external cooling. After the addition the cooling bath was removed and the mixture allowed to warm up spontaneously, reaching 32°C after 2-1/2 hours. A white precipitate was observed.

A nitrogen sparge was applied for 1 hour and 250 ml toluene added, giving a clear solution. A solution of 318.8 g triethylamine (3.15 mole) in 200 ml toluene was then added during one half hour while using an ice bath to keep the temperature at 35±5°C. After the triethylamine solution, 206.3 g (1 mole) 2,4-di-t-butylphenol dissolved in 200 ml toluene was added, and the mixture stirred for 14 hours.

The mixture was filtered to remove triethylamine hydrochloride, and the filtrate concentrated under vacuum to remove most of the toluene. Cooling the concentrate in an ice bath produced a slurry of crystals, which were collected, washed with cold toluene, and dried to give 119.3 g of the product phosphite, m.p. 175 to 177.5°C, 9.86% trivalent phosphorus by titration (theoretical trivalent phosphorus 10.24%).

Exemplary alkyl monoalkanol amines, which are a preferred class of aliphatic amines, include palmityl ethanolamine, stearyl ethanolamine, oleyl ethanolamine, myristyl ethanolamine, behenyl ethanolamine, and eicosyl ethanolamine; stearyl propanolamine, palmityl propanolamine, distearyl monoethanolamine, dipalmityl monoethanolamine, dimyristyl monoethanolamine, and myristyl propanolamine.

Exemplary alkyl dialkanol amines, which are also a preferred class of aliphatic amines, include palmityl diethanolamine, stearyl diethanolamine, oleyl diethanolamine, myristyl diethanolamine, behenyl diethanolamine, eicosyl diethanolamine; stearyl dipropanolamine, palmityl dipropanolamine and myristyl dipropanolamine.

Exemplary trialkyl amines include stearyl diethylamine, myristyl diethylamine, palmityl diethylamine, stearyl decyl octyl amine, stearyl butyl decyl amine, distearyl ethylamine, dipalmityl propylamine, behenyl dimethylamine and isooctyl dibutylamine.

Exemplary dialkyl amines include stearyl ethyl amine, myristyl ethyl amine, palmityl ethyl amine, stearyl decyl amine, stearyl butyl amine, stearyl methyl amine, palmityl propyl amine, behenyl methyl amine, and eicosyl methyl amine.

Exemplary monoalkyl amines include stearyl amine, myristyl amine, palmityl amine, oleyl amine, and behenyl amine.

The following Examples illustrate pentaerythritol-spiro-bis-phosphite compositions having an improved hydrolytic stability in accordance with the invention.

Examples 1 to 4

To the distearyl pentaerythritol bis phosphite prepared in accordance with Example I was added N-n-octadecyl diethanolamine (90% C-18, balance mainly C-16) in the amounts listed in Table I below.

TABLE I

| Example No. | Amount of N-n-octadecyl diethanolamine % by weight of bisphosphite | Number of phases in melt | Hydrolytic stability (hours to 50% decomposition)* |
|---|---|---|---|
| Control | none | 1 | 31 |
| 1 | 5 | 1 | 97 |
| 2 | 10 | 1 | 152 |
| 3 | 25 | 1 | 205 |
| 4 | 30 | 1 | 215 |

*30% RH, 10 g samples

The blends were heated until reduced to a hot melt, and then cooled quickly by pouring onto a metal surface at 25 to 27°C. In all cases, the compositions gave a single-phase melt that solidified on the metal surface within two minutes, and lifted off easily. The compositions were all readily flaked, mild in odor, and good in color.

As shown in Table I, the improvement in hydrolytic stability was commensurate with the amount of amine additive. Example 1, the composition containing 5% N-n-octadecyl diethanolamine, gave a hydrolytic stability that was adequate to normal use. Example 2, the composition containing 10% of the amine, gave generous protection even for extreme conditions. Example 4, the composition containing 30% amine, tolerated the amine without adverse effect, but probably more amine was present than was required, since no significant improvement in hydrolytic stability, was obtained as compared to the compositions containing 10% or 25% of the amine.

The hydrolytic stability of the phosphite was determined in terms of the time required for 50% decomposition to occur as the phosphite was exposed in a humidity chamber under controlled conditions. The exposed phosphite was sampled periodically and analyzed by liquid chromatography. The following procedure was used.

Humidity chambers

Humidity chambers were set up using large desiccators (SGA No. 1230, 250 mm) with double-tiered plates. In the desiccator's well were put 1500 ml of solutions of about

a) 37% NaOH to obtain about 25% Relative Humidity (RH)
b) 25% NaOH to obtain about 60% RH
c) water to obtain 100% RH

Sample preparation

In 29.6 ml (1 oz.) wide-mouth, screw-cap jars, were weighed adequate amounts of the materials (or mixtures) to be investigated, and the contents melted with a heat gun. The molten components were stirred to assure a complete homogenization. Upon crystallization, the mixtures were ground to a fine powder using a mortar and pestle. Phosphites which were studied "as is" with no additions were layered with no melting.

In aluminum weighing dishes (SGA No. 9000) there was layered the indicated quantity of the ground powder and, at a time zero, the dishes were placed inside the humidity chamber. Simultaneously, a LC analysis was run at time zero. Later, on withdrawing samples for sequential LC analyses the powder was thoroughly mixed inside the aluminum dish using a spatula, before withdrawing the actual sample.

In a 7.4 ml (2-dram)vial (SGA No. 5250) there were weighed accurately 100 mg of sample, also a micromagnetic stirring bar and 5 ml (accurately measured) of the LC solvent used (see below). The mixture was stirred for 10 minutes on a magnetic stirring plate and filtered using a Sample Clarification Kit (Waters catalog No. 26865). Exactly 10 mcl of the filtered solution was injected using the LC parameters indicated below.

Liquid chromatography

LC runs were carried out using a duPont modified-silica Zorbax-CN column (duPont No. 850952—705). Solvent, a 10—1 (v-v) mixture of isooctane-THF (LC grade), pumped at the rate of 1 ml/min. Chart speed: 1,25 cm/min. (0.5"/min.); detectors: Refractive Index att. ×4 and U.V. (254 nm) at att. ×0.1 AUFS.

Calculations

All calculations were carried out on the RI trace obtained. Peak heights were measured (in mm.) from the base line. A "Response factor, f" was calculated for each peak, using this equation

$$f=\frac{\text{peak height (mm)}}{\text{weight (mg)}\times 2}$$

This equation applies only when the weight is dissolved in 5-ml of solvent and 10 mcl are injected.

The change of "f" with time was followed. After total hydrolysis, the f values were normalized, assigning a value of 100 to the f value for the sample at time zero. The normalized values were plotted vs. time (in hours or days as indicated) to obtain the 50% decomposition time.

When there was more than one major peak in the chromatogram of a phosphite, as for example with the isomeric forms of distearyl pentaerythritol diphosphite, and these peaks showed different decomposition rates, then the 50% decomposition times measured for each peak separately were averaged.

For comparison purposes, another portion of the distearyl pentaerythritol-spiro-bis-phosphite of Example I was blended as a hot melt with triisopropanolamine in the amounts indicated in Table II below.

The following results were obtained:

TABLE II

| Control No. | Amount of triisopropanolamine | Number of phases in melt | Hydrolytic stability (hours to 50% decomposition)* |
|---|---|---|---|
| 1 | 5% | 1 | 310 |
| 2 | 10% | 1 | 359 |
| 3 | 25% | 2 | 320 |

*30% RH, 10 g sample

The compositions containing 5% and 10% amine, Controls 1 and 2, formed a homogeneous melt that solidified when poured onto the cool metal surface at 25 to 27°C, but the product was sticky, and could not be lifted off the metal. At the 25% amine level, Control 3, two phases were formed in the melt, one composed of a blend of the amine and the phosphite and the other composed of amine. Solidification of this composition was slow in contact with the cool metal surface, and the product was very sticky.

Examples 5 to 7

To the di(2,4-di-t-butylphenyl pentaerythritol bis phosphite prepared in accordance with Example II was added long chain aliphatic amine as shown in Table III below:

TABLE III

| Example No. | Amine (% by weight of bisphosphite) | Numbers of phases in melt | Hydrolytic stability (days to 50% decomposition)* |
|---|---|---|---|
| Control | none | 1 | 7 |
| 5 | N-n-octadecyldiethanolamine (5)** | 1 | 45 |
| 6 | N-n-octadecyldiethanolamine (5)*** | 1 | 46 |
| 7 | n-octadecylamine (5) | 1 | 52 |

*100% RH, 1.25 g samples

**amine and phosphite blended in solution

***amine and phosphite blended dry

As shown in Table III, the hydrolytic stability of this pentaerythritol phosphite has been dramatically improved by the addition of long chain amine.

The phosphite amine compositions of the invention are effective, especially in combinations with other known stabilizers, in enhancing the resistance to deterioration by heat and light of polyvinyl chloride resins. The term "polyvinyl chloride" as used herein is inclusive of any polymer formed at least in part of the recurring group:

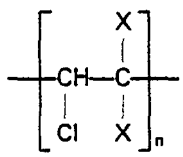

and having chlorine content in excess of 40%. In this group, the X groups can each be either hydrogen or chlorine, and n is the number of such units in the polymer chain. In polyvinyl chloride homopolymers, each of the X groups is hydrogen. Thus, the term includes not only polyvinyl chloride homopolymers but also after-chlorinated polyvinyl chlorides as a class, for example, those disclosed in GB—A—893,288 and also copolymers of vinyl chloride in a major proportion and other copolymerizable monomers in a minor proportion, such as copolymers of vinyl chloride and vinyl acetate, copolymers of vinyl chloride with maleic or fumaric acids or esters, and copolymers of vinyl chloride with styrene. The stabilizer compositions are effective also with mixtures of polyvinyl chloride in a major proportion with a minor proportion of other synthetic resins such as chlorinated polyethylene or a copolymer of acrylonitrile, butadiene and styrene.

The phosphite and amine stabilizer compositions are applicable to the stabilization of rigid polyvinyl chloride resin compositions, that is, resin compositions which are formulated to withstand high processing temperatures, of the order of 190°C (375°F) and higher, as well as plasticized polyvinyl chloride resin compositions of conventional formulation, even though resistance to heat distortion is not a requisite. Conventional plasticizers well known to those skilled in the art can be employed, such as, for example, dioctyl phthalate, octyl diphenyl phosphate and epoxidized soybean oil.

Particularly useful plasticizers are the epoxy higher esters having from 20 to 150 carbon atoms. Such esters will initially have had unsaturation in the alcohol or acid portion of the molecule, which is taken up by the formation of the epoxy group.

Typical unsaturated acids are acrylic, oleic, linoleic, linolenic, erucic, ricinoleic, and brassidic acids, and these may be esterified with organic monohydric or polyhydric alcohols, the total number of carbon atoms of the acid and the alcohol being within the range stated. Typical monohydric alcohols include butyl alcohol, 2-ethyl hexyl alcohol, lauryl alcohol, isooctyl alcohol, stearyl alcohol, and oleyl alcohol. The octyl alcohols are preferred. Typical polyhydric alcohols include pentaerythritol, glycerol, ethylene glycol, 1,2-propylene glycol, 1,4-butylene glycol, neopentyl glycol, ricinoleyl alcohol, erythritol, mannitol and sorbitol. Glycerol is preferred. These alcohols may be fully or partially esterified with the epoxidized acid. Also useful are the epoxidized mixtures of higher fatty acid esters found in naturally-occurring oils such as epoxidized soybean oil, epoxidized olive oil, epoxidized coconut oil, epoxidized cotton-seed oil, epoxidized tall oil fatty acid esters and epoxidized tallow. Of these, epoxidized soybean oil is preferred.

The alcohol can contain the epoxy group and have a long or short chain, and the acid can have a short or long chain, such as epoxystearyl acetate, epoxystearyl stearate, glycidyl stearate, and polymerized glycidyl methacrylate.

The polyvinyl chloride resin can be in any physical form, including, for example, powders, films sheets, molded articles, foams, filaments and yarns.

A sufficient amount of the phosphite and amine stabilizer composition is used to enhance the resistance of the polyvinyl chloride to deterioration in physical properties, including, for example, discoloration and embrittlement, under the heat and/or light conditions to which the polymer will be subjected. Very small amounts are usually adequate. Amounts within the range from 0.01 to 5% of the phosphite and from 0.01 to 10% of other stabilizers by weight of the polyvinyl chloride resin are satisfactory. Preferably, an amount within the range from 0.05 to 2% of phosphite, and from 0.1 to 5% of other stabilizer is employed for optimum stabilizing effectiveness.

The phosphite and amine stabilizer compositions of the invention can be employed as the sole stabilizers. They can also be used in combination with other conventional heat and light stabilizers for polyvinyl chloride resins, such as, for example, polyvalent metal salts and alkaline earth metal phenolates, as well as epoxy compounds.

A particularly useful stabilizer system contains the following amounts of ingredients:

(a) phosphite in an amount within the range from 25 to 45 parts by weight;

(b) phenolic antioxidant in an amount within the range from 0.01 to 1 part by weight;

(c) polyvalent metal salt of an aliphatic carboxylic acid of an alkyl phenol in an amount within the range from 25 to 45 parts by weight;

plus any one or more of the following optional ingredients:

(d) free aliphatic carboxylic acid in an amount within the range from 0.5 to 5 parts by weight; and

(e) acid phosphite in an amount within the range from 0.5 to 5 parts by weight.

In addition, any of the conventional polyvinyl chloride resin additives, such as lubricants, emulsifiers, antistatic agents, flame-proofing agents, pigments and fillers, can be employed.

Preferably, the stabilizer system is added to the polyvinyl chloride resin in an amount to provide in the resin from 0.2 to 1% of the phosphite; from about 0.1 to 2% of phenolic antioxidant; and from 0 to 1% total of one or more of the additional ingredients, as noted above.

The stabilizer system is incorporated in the polymer in suitable mixing equipment, such as a mill or a Banbury mixer. If the polymer has a melt viscosity which is too high for the desired use, the polymer can be worked until its melt viscosity has been reduced to the desired range before addition of the stabilizer. Mixing is continued until the mixture is substantially uniform. The resulting composition is then removed from the mixing equipment and brought to the size and shape desired for marketing or use.

The stabilized polyvinyl chloride resin can be worked into the desired shape, such as by milling, calendering, extrusion or injection molding, or fiber-forming. In such operations, it will be found to have a considerably improved resistance to discoloration and embrittlement on exposure to heat and light.

The phosphite and amine stabilizer compositions of the invention are especially effective heat stabilizers for olefin polymers such as polyethylene, polypropylene, polybutylene, polypentylene, polyisopentylene, and higher polyolefins.

Olefin polymers on exposure to elevated temperatures undergo degradation, resulting in embrittlement and discoloration.

The phosphite and amine stabilizer compositions can be employed with any olefin polymer, including low-density polyethylene, high density polyethylene, polyethylenes prepared by the Ziegler-Natta process, polypropylenes prepared by the Ziegler-Natta process, and by other polymerization methods from propylene, poly(butene-1)poly(pentene-1)poly(3-methylbutene-1)poly(4-methylpentene-1), polystyrene, and mixtures of polyethylene and polypropylene with other compatible polymers, such as mixtures of polyethylene and polypropylene, and copolymers of such olefins, such as copolymers of ethylene, propylene, and butene, with each other and with other copolymerizable monomers. The term "olefin polymer" encompasses both homopolymers and copolymers.

Polypropylene solid polymer can be defined in a manner to differentiate it from other polyolefins as having a density within the range from 0.86 to 0.91, and a melting point about 150°C. The phosphites of the invention are applicable to all such polypropylenes, as distinguished from polypropylenes in the liquid form or in semi-liquid of gel-like forms, such as are used as greases and waxes.

The phosphite and amines stabilizer compositions of the invention are applicable to polypropylenes prepared by any of the various procedures, for the molecular weight and tacticity are not factors affecting this stabilizer system. Isotactic polypropylene, available commercially under the trade name PRO-FAX, and having a softening or hot-working temperature of about 177°C (350°F), is an example of a sterically regular polypropylene polymer.

Mixtures of polypropylene with other compatible polymers and copolymers of propylene with copolymerizable monomers not reactive with the phosphites or stabilizer composition can also be stabilized, for example, mixtures of polyethylene and polypropylene, and copolymers of propylene and ethylene stabilizer.

The phosphite and amine stabilizer compositions are also effective to enhance the resistance to heat degradation of polystyrene; polydienes, such as polybutadiene and polyisoprene; and copolymers of olefins and dienes with other ethylenically and acetylenically unsaturated monomers, such as ethylenevinyl acetate copolymers, styrene-butadiene copolymers, acrylonitrile-styrene-butadiene copolymers, synthetic rubbers of all types, such as polychloroprene; polyvinylidene chloride; and copolymers of vinyl chloride and vinylidene chloride; vinylidene chloride and vinyl acetate; and other ethylenically unsaturated monomers; polyacetals such as polyoxymethylene and polyoxyethylene; polycarbonates; polyphenylene oxides; polyesters such as polyethylene glycolterephthalic acid ester polymers; polyamides such as polyepsilon-caprolactam; polyhexamethylene adipamide and polydecamethylene adipamide; polyurethanes; and epoxy resins.

The synthetic polymer can be in any physical form, including, for example, filaments, yarns, films, sheets, molded articles, latex and foam.

A sufficient amount of the stabilizer composition including the phosphite and amine is used to improve the resistance of the synthetic polymer to deterioration in physical properties, including, for example, discoloration, reduction in melt viscosity and embrittlement, under the conditions to which the polymer will be subjected. Very small amounts are usually adequate. Amounts within the range from 0.001 to 5% total stabilizers by weight of the polymer are satisfactory. Preferably, from 0.01 to 3% is employed, for optimum stabilization.

The phosphite and amine compositions of the invention can be employed as the sole stabilizers or in combination with other conventional heat and light stabilizers for the particular olefin polymer.

Thus, for example, there can be employed fatty acid salts of polyvalent metals, and the higher fatty alkyl esters of thiodipropionic acids, such as, for example, dilauryl thiodipropionate.

With polyamide resin compositions, polyamide stabilizers such as copper salts in combination with iodides and/or other phosphorus compounds and salt of divalent manganese can be used.

With synthetic rubbers and acrylonitrile-butadiene-styrene terpolymers, polyvalent metal salts of higher fatty acids can be used.

In addition, other conventional additives for synthetic polymers, such as plasticizers, lubricants, emulsifiers, antistatic agents, flame-proofing agents, pigments and fillers, can be employed.

The stabilizer composition is incorporated in the polymer in suitable mixing equipment, such as a mill or a Banbury mixer. If the polymer has a melt viscosity which is too high for the desired use, the polymer can be worked until its melt viscosity has been reduced to the desired range before addition of the stabilizers. Mixing is continued until the mixture is substantially uniform. The resulting composition is then removed from the mixing equipment and brought to the size and shape desired for marketing or use.

The stabilized polymer can be worked into the desired shape, such as by milling, calendering, extruding or injection molding or fiber-forming. In such operations, it will be found to have a considerably improved resistance to reduction in melt viscosity during the heating, as well as a better resistance to discoloration and embrittlement on ageing and heating.

The following Examples represent preferred embodiments of synthetic resin compositions containing pentaerythritol spiro-bis phosphite amine compositions of the invention.

Examples 8 and 9

Three polyvinyl chloride resin compositions having the following formulation were prepared:

| | Parts by weight | | |
|---|---|---|---|
| | Example 8 | Example 9 | Control 4 |
| Vinyl chloride homopolymer (Geon 110×450) | 100 | 100 | 100 |
| Dialkyl phthalate (Santicizer 711) | 43 | 43 | 43 |
| Epoxysoybean oil | 7 | 7 | 7 |
| Phosphite/amine composition of Example 1 | 0.2 | — | — |
| Phosphite/amine composition of Example 6 | — | 0.2 | — |
| Zinc stearate | 0.15 | 0.15 | 0.25 |
| Calcium stearate | 0.12 | 0.12 | 0.19 |
| 2,6-di-t-butyl-p-cresol | 0.038 | 0.038 | 0.06 |

The compositions were milled on a two-roll mill at 177°C (350°F) for three minutes, and then sheeted off. The milled sheets were cut into strips, which were then placed in an oven and heated at 177°C (350°F) or 190°C (375°F) until dark edges appeared on the samples. Samples of each were cut off from the strips at 10 minute intervals, and placed on a card. The times required for the samples to yellow and to develop dark edges were noted, and are reported below in Table IV.

TABLE IV

| | Example 8 | Example 9 | Control 4 |
|---|---|---|---|
| Oven heat stability 177°C (350°F) | | | |
| Minutes to yellow | 90 | 45 | 15 |
| Minutes to dark edge | >120 | >120 | 120 |
| Oven heat stability 190°C (375°F) | | | |
| Minutes to yellow | 30 | 20 | 10 |
| Minutes to dark edge | 70 | 80 | 50 |

Samples also were molded into panels 1.25 mm (0.050 inch) thick, and the yellow index determined according to ASTM D 1925—70 using a Hunter colorimeter with the following results:

| Color of 1.25 mm (0.050") molding, hunter colorimeter | Example 8 | Example 9 | Control 4 |
|---|---|---|---|
| Yellow index, ASTM D1925—70 | 2.02 | 3.51 | 3.94 |

The lower Yellow Index values signify less yellow and hence preferable samples. Examples 8 and 9 are clearly superior.

Examples 10 and 11

Three polypropylene compositions were prepared, having the following formulation:

| | Parts by weight | | |
|---|---|---|---|
| | Example 10 | Example 11 | Control 5 |
| Polypropylene (Profax 6501) | 100 | 100 | 100 |
| Calcium stearate | 0.1 | 0.1 | 0.1 |
| Distearyl thiodipropionate | 0.3 | 0.3 | 0.3 |
| Antioxidant, 1,1,3-tris(2'-methyl-4'-hydroxy-5'-tert.-butylphenyl)butane | 0.2 | 0.2 | 0.2 |
| Phosphite amine composition of Example 1 | 0.2 | — | — |
| Phosphite amine composition of Example 5 | — | 0.2 | — |

The compositions were milled on a two-roll mill at 190°C (375°F) for three minutes, and then molded into sample panels 1.0 mm (0.04 inch) thick, and the yellow index according to ASTM D1925—70 determined using a Hunter colorimeter with the following results:

| Yellow index (ASTM D1925—70) of 1.0 mm (0.04") molding | Example 10 | Example 11 | Control 5 |
|---|---|---|---|
| Molded 5 min. at 204°C (400°F) | 7.16 | 5.34 | 10.21 |
| Molded 15 min. at 288°C (550°F) | 17.24 | 17.36 | 18.69 |

Examples 10 and 11 are clearly superior.

## Claims

1. Pentaerythritol-spiro-bis-phosphite compositions having an improved hydrolytic stability, comprising

(1) a pentaerythritol-spiro-bis-phosphite of the formula:

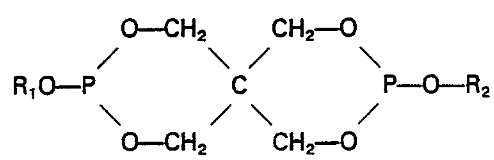

I

wherein:

$R_1$ and $R_2$ are selected from the group consisting of alkyl and alkylaryl groups having at least fourteen carbon atoms up to thirty-six carbon atoms; and

(2) a long-chain aliphatic amine having the formula:

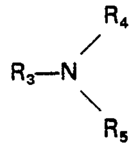

II

wherein:

$R_3$, $R_4$ and $R_5$ are selected from the group consisting of hydrogen; aliphatic groups having from one to thirty-six carbon atoms; and hydroxyalkyl having from two to six carbon atoms; one of $R_3$, $R_4$ and $R_5$ is an aliphatic group having at least fourteen carbon atoms, and the remaining of $R_3$, $R_4$ and $R_5$ are selected from hydrogen, alkyl having from one to four carbon atoms and hydroxyalkyl, said amine being present in amounts of from 0.1 to 35% by weight of the composition.

2. Pentaerythritol-spiro-bis-phosphite compositions according to claim 1 in which $R_1$ and $R_2$ are alkyl or alkylaryl.

3. Pentaerythritol-spiro-bis-phosphite compositions according to claim 1 or 2 in which the amine is an aliphatic amine, preferably an aliphatic amine having at least one hydroxyalkyl group.

4. Pentaerythritol-spiro-bis-phosphite compositions according to claim 1 or 2 in which the amine is an aliphatic amine wherein one or two of $R_3$, $R_4$ and $R_5$ is (are) hydrogen.

5. Pentaerythritol-spiro-bis-phosphite compositions according to claim 1 or 2 in which the amine is an aliphatic amine wherein one or two of $R_3$, $R_4$ and $R_5$ is (are) alkyl of one to four carbon atoms.

6. Pentaerythritol-spiro-bis-phosphite compositions according to claim 1 or 2 in which the amine is an aliphatic amine having two hydroxyalkyl groups, preferably two hydroxyethyl groups.

7. Pentaerythritol-spiro-bis-phosphite compositions according to claim 6 in which the amine is N-n-octadecyl diethanolamine.

8. A stabilizer composition capable of enhancing resistance to deterioration by heat and/or light of synthetic resin compositions comprising a phenolic antioxidant and a pentaerythritol-spiro-bis-phosphite composition according to any of claims 1 to 7.

9. A polyvinyl chloride resin composition, preferably a composition containing polyvinyl homopolymer or a copolymer of vinyl chloride and vinyl acetate, having improved resistance to deterioration when heated at 177°C (350°F), comprising a polyvinyl chloride resin formed at least in part of the recurring group

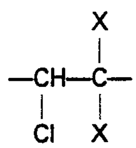

and having a chlorine content in excess of 40%, where X is either hydrogen or chlorine; and a pentaerythritol-spiro-bis-phosphite composition in accordance with any of claims 1 to 7.

10. An olefin polymer composition having improved resistance to deterioration comprising an olefin polymer selected from the group consisting of polymers of alpha-olefins having from two to six carbon atoms and polystyrene, preferably polypropylene or polyethylene, and a pentaerythritol-spiro-bis-phosphite composition in accordance with any of claims 1 to 7.

**Patentansprüche**

1. Pentaerythrit-spiro-bis-phosphit-Zusammensetzung mit verbesserter hydrolytischer Stabilität, welche umfaßt:

(a) ein Pentaerythrit-spiro-bis-phosphit der allgemeinen Formel

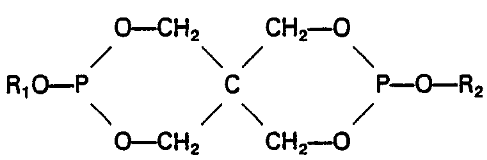

I

in der $R_1$ und $R_2$ ausgewählt sind aus der Gruppe: Alkyl- und Alkylarylgruppen mit wenigstens 14 und bis zu 36 Kohlenstoffatomen; und

(b) ein langkettiges aliphatisches Amin der allgemeinen Formel:

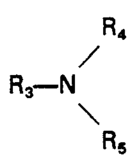

II

in der $R_3$, $R_4$ und $R_5$ ausgewählt sind aus der Gruppe: Wasserstoff, aliphatische Gruppen mit 1 bis 36 Kohlenstoffatomen und Hydroxyalkylgruppen mit 2 bis 6 Kohlenstoffatomen, wobei einer der Reste $R_3$, $R_4$ und $R_5$ eine aliphatische Gruppe mit wenigstens 14 Kohlenstoffatomen ist und die übrigen Reste $R_3$, $R_4$ und $R_5$ asugewählt sind von Wasserstoff, Alkyl mit 1 bis 4 Kohlenstoffatomen und Hydroxyalkyl; wobei das Amin in einer Menge von 0,1 bis 35 Gew.-%, bezogen auf das Gewicht der Zusammensetzung, anwesend ist.

2. Pentaerythrit-spiro-bis-phosphit-Zusammensetzung nach Anspruch 1, worin $R_1$ und $R_2$ jeweils für Alkyl oder Alkylaryl stehen.

3. Pentaerythrit-spiro-bis-phosphit-Zusammensetzung nach Anspruch 1, worin das Amin ein aliphatisches Amin ist, vorzugsweise ein aliphatisches Amin mit wenigstens einer Hydroxyalkylgruppe.

4. Pentaerythrit-spiro-bis-phosphit-Zusammensetzung nach Anspruch 1 oder 2, worin das Amin ein aliphatisches Amin ist, in dem einer oder zwei der Reste $R_3$, $R_4$ und $R_5$ für Wasserstoff stehen.

5. Pentaerythrit-spiro-bis-phosphit-Zusammensetzung nach Anspruch 1 oder 2, worin das Amin ein aliphatisches Amin ist, in dem einer oder zwei der Reste $R_3$, $R_4$ und $R_5$ für Alkyl mit 1 bis 4 Kohlenstoffatomen stehen.

6. Pentaerythrit-spiro-bis-phosphit-Zusammensetzung nach Anspruch 1 oder 2, worin das Amin ein aliphatisches Amin mit zwei Hydroxyalkylgruppen, vorzugsweise mit zwei Hydroxyäthylgruppen, ist.

7. Pentaerythrit-spiro-bis-phosphit-Zusammensetzung nach Anspruch 6, worin das Amin N-n-Octadecyl-diäthanolamin ist.

8. Stabilisatorzusammensetzung zur Verbesserung der Widerstandsfähigkeit von synthetischen Harzzusammensetzungen gegenüber Zersetzung durch Wärme und/oder Licht, die ein phenolisches Oxidationsschutzmittel und eine Pentaerythrit-spiro-bis-phosphit-Zusammensetzung nach einem der Ansprüche 1 bis 7 umfaßt.

9. Polyvinylchloridharz-Zusammensetzung, vorzugsweise eine Zusammensetzung aus einem Polyvinylhomopolymerisat oder einem Mischpolymerisat aus Vinylchlorid und Vinylacetat, mit verbesserter Widerstandsfähigkeit gegenüber Zersetzung beim Erhitzen auf 177°C (350°F), die ein Polyvinylchloridharz umfaßt, das wenigstens zum Teil aus den wiederkehrenden Einheiten

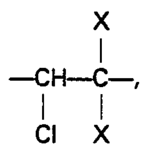

in denen X für Wasserstoff oder Chlor steht, gebildet ist und einen Chlorgehalt von mehr als 40% aufweist, sowie eine Pentaerythrit-spiro-bis-phosphit-Zusammensetzung nach einem der Ansprüche 1 bis 7 umfaßt.

10. Olefinpolymer-Zusammensetzung mit verbesserter Widerstandsfähigkeit gegenüber Zersetzung, die ein Olefinpolymer, ausgewählt aus der Gruppe: Polymerisate von α-Olefinen mit 2 bis 6 Kohlenstoffatomen und Polystyrol, vorzugsweise Polypropylen oder Polyäthylen, sowie eine Pentaerythrit-spiro-bis-phosphit-Zusammensetzung nach einem der Ansprüche 1 bis 7 umfaßt.

**Revendications**

1. Compositions de pentaérythritol-spiro-bis-phosphites ayant une stabilité améliorée à l'hydrolyse, comprenant:

(1) un pentaérythritol-spiro-bis-phosphite de formule:

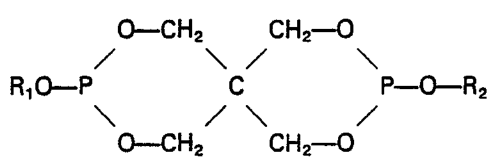

I

dans laquelle:

$R_1$ et $R_2$ sont choisis parmi les groupes alkyle et alkylaryle contenant au moins 14 atomes de carbone et jusqu'à 36 atomes de carbone; et

(2) une amine aliphatique à longue chaîne répondant à la formule:

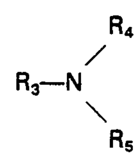

II

dans laquelle:

$R_3$, $R_4$ et $R_5$ sont choisis parmi les atomes d'hydrogène, les groupes aliphatiques contenant 1 à 36 atomes de carbone et les groupes hydroxyalkyle contenant 2 à 6 atomes de carbone; l'un des symboles $R_3$, $R_4$ et $R_5$ représente un groupe aliphatique à au moins 14 atomes de carbone et les autres sont choisis parmi les atomes d'hydrogène, les groupes alkyle en $C_1$—$C_4$ et hydroxyalkyle, cette amine étant présente en proportions de 0,1 à 35% du poids de la composition.

2. Compositions de pentaérythritol-spiro-bis-phosphites selon la revendication 1, dans lesquelles $R_1$ et $R_2$ représentent des groupes alkyle ou alkylaryle.

3. Compositions de pentaérhthritol-spiro-bis-phosphites selon la revendication 1 ou 2, dans lesquelles l'amine est une amine aliphatique, de préférence une amine aliphatique contenant au moins un groupe hydroxyalkyle.

4. Compositions de pentaérythritol-spiro-bis-phosphites selon la revendication 1 ou 2, dans lesquelles l'amine est une amine aliphatique dans laquelle un ou deux des symboles $R_3$, $R_4$ et $R_5$ représentent l'hydrogène.

5. Compositions de pentaérythritol-spiro-bis-phosphites selon la revendication 1 ou 2, dans lesquelles l'amine est une amine aliphatique dans laquelle un ou deux des symboles $R_3$, $R_4$ et $R_5$ représentent des groupes alkyle en $C_1$—$C_4$.

6. Compositions de pentaérythritol-spiro-bis-phosphites selon la revendication 1 ou 2, dans lesquelles l'amine est une amine aliphatique contenant deux groupes hydroxyalkyle, de préférence deux groupes hydroxyéthyle.

7. Compositions de pentaérythritol-spiro-bis-phosphites selon la revendication 6, dans lesquelles l'amine est la N-n-octadécyldiéthanolamine.

8. Une composition stabilisante capable d'améliorer la résistance aux dégradations à la chaleur et/ou à la lumière des compositions de résines synthétiques, comprenant un antioxydant phénolique et une composition de pentaérythritol-spiro-bis-phosphite selon l'une quelconque des revendications 1 à 7.

9. Une composition de résine de chlorure de polyvinyle, de préférence une composition contenant un homopolymère polyvinylique ou un copolymère du chlorure de vinyle et de l'acétate de vinyle, ayant une résistance améliorée aux dégradations au chauffage à 177°C, comprenant une résine de chlorure de polyvinyle formée, en partie au moins, du motif récurrent:

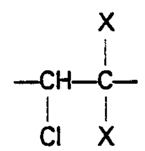

et ayant une teneur en chlore de plus de 40%, X représentant l'hydrogène ou le chlore; et une composition de pentaérythritol-spiro-bis-phosphite selon l'une quelconque des revendications 1 à 7.

10. Une composition de polymère d'oléfine ayant une résistance améliorée aux dégradations, comprenant un polymère d'oléfine choisi parmi les polymères d'alpha-oléfines en $C_2$—$C_6$ et le polystyrène, de préférence du polypropylène ou du polyéthylène, et une composition de pentaérythritol-spiro-bis-phosphite selon l'une quelconque des revendications 1 à 7.